# EUROPÄISCHE PATENTSCHRIFT

(11) **EP 2 921 396 B1**
(45) Veröffentlichungstag und Bekanntmachung des Hinweises auf die Patenterteilung: **20.12.2017**
(21) Anmeldenummer: 15151071.6
(22) Anmeldetag: 14.01.2015
(51) Int. Cl.: B62M 6/55, B62M 6/45

(54) **Elektrofahrrad mit Rekuperationsmöglichkeit**
Electric bicycle with recuperation
Vélo électrique à récupération d'énergie

(30) Priorität: 17.03.2014 DE 102014204853
(43) Veröffentlichungstag der Anmeldung: 23.09.2015
(73) Patentinhaber: ROBERT BOSCH GMBH, 70442 Stuttgart (DE)
(72) Erfinder: Weissert, Mario, 72766 Reutlingen (DE)

(56) Entgegenhaltungen:
- EP-A1- 2 481 625
- EP-A1- 2 615 023
- EP-A2- 1 415 904
- EP-A2- 1 457 414
- JP-A- 2001 213 383
- JP-A- 2010 095 203
- US-A- 3 921 741
- US-A- 6 157 149

## Beschreibung

### Stand der Technik

Die vorliegende Erfindung betrifft ein motorisch und/oder mit Muskelkraft betreibbares Elektrofahrrad mit Rekuperationsmöglichkeit und/oder elektrischer Bremsfunktion.

Elektrofahrräder sind aus dem Stand der Technik in unterschiedlichen Ausgestaltungen bekannt. Hierbei gibt es grundsätzlich die Möglichkeit, den elektrischen Antrieb als Nabenantrieb vorzusehen oder den elektrischen Antrieb im Bereich eines Kurbeltriebs des Fahrrads anzuordnen (Mittelmotorkonzept). Eine Rekuperationsfunktion kann dabei bei den Nabenmotorantrieben relativ einfach durch steuerungstechnische Maßnahmen durchgeführt werden. Beim Mittelmotorkonzept kann eine Rekuperationsfunktion prinzipbedingt nicht so einfach umgesetzt werden, da beispielsweise bei einer Bergabfahrt die Kette, welche den Kurbeltrieb mit einem Hinterrad verbindet, üblicherweise aufgrund des Vorsehens eines Freilaufs nicht mitläuft. Daher kann auch ein Antrieb des Mittelmotors über die Kette nicht ermöglicht werden. Es wäre jedoch wünschenswert auch bei Mittelmotorkonzepten eine Rekuperation und/oder elektrische Bremsfunktion verwirklichen zu können.

Die Schriften EP 2 615 023 A1, EP 2 481 625 A1 und JP 2010 095 203 A offenbaren Elektrofahrräder mit rekuperationsfähigen Antriebsvorrichtungen. Die JP 2010 095 203 A offenbart die vorkennzeichnenden Merkmale des Anspruchs 1.

### Offenbarung der Erfindung

Das erfindungsgemäße motorisch und/oder mit Muskelkraft betreibbare Elektrofahrrad weist demgegenüber den Vorteil auf, dass es als eine als Motor und/oder Generator betreibbare elektrische Maschine am Kurbeltrieb des Fahrrads angeordnet werden kann und eine kostengünstig herstellbare und nur einen geringen Bauraum einnehmende Möglichkeit einer Rekuperation und/oder elektrischer Bremsfunktion vorhanden ist. Dies wird erfindungsgemäß dadurch erreicht, dass ein Freilauf an einem Antriebsrad, insbesondere einem Hinterrad des Fahrrads, angeordnet ist und eine Sperrvorrichtung zum Sperren des Freilaufs am Antriebsrad vorgesehen ist. Die Sperrvorrichtung kann dabei mittels einer Betätigungsvorrichtung betätigt werden, wobei eine Drehung des Antriebsrads über ein Kraftübertragungselement, z.B. eine Kette, bei gesperrter Sperrvorrichtung auf die elektrische Maschine übertragen wird. Diese kann dann als Generator betrieben werden. Somit kann erfindungsgemäß nur bei geringem baulichem Aufwand auch bei Mittelmotorkonzepten von Elektrofahrrädern beispielsweise eine Rekuperation zum Aufladen eines Energiespeichers oder eine Bremswirkung, z.B. als Wirbelstrombremse, einfach und kostengünstig realisiert werden.

Die Unteransprüche zeigen bevorzugte Weiterbildungen der Erfindung.

Vorzugsweise umfasst die Betätigungsvorrichtung zur Betätigung der Sperrvorrichtung am Freilauf wenigstens ein Bremshebel. Die Betätigung der Sperrvorrichtung erfolgt somit z.B. bei Betätigung des Bremshebels. Hierbei kann, wenn das Fahrrad zwei Bremshebel hat, die Sperrvorrichtung schon bei ausschließlicher Betätigung eines der Bremshebel oder beider Bremshebel aktiviert werden. Wenn die Bremse des Fahrrads einen Bowdenzug umfasst, kann die Aktivierung der Sperrvorrichtung auch über den Bowdenzug erfolgen. Alternativ, wenn die Bremse des Fahrrads eine hydraulische Bremse ist, kann eine Betätigung der Sperrvorrichtung auch über den aufgebauten Hydraulikdruck erfolgen. Vorzugsweise wird die Sperrung des Freilaufs direkt mechanisch betätigt.

Das Fahrrad umfasst ferner erfindungsgemäss eine Sensoreinrichtung und eine Steuereinheit, wobei die Sensoreinrichtung eingerichtet ist, eine vom Fahrer ausgeübte Bremskraft am Bremshebel zu erfassen und der Steuereinheit zu übermitteln. Die Steuereinheit ist eingerichtet, die elektrische Maschine, basierend auf der erfassten Bremskraft, zu steuern. Somit kann die Steuereinheit eine durch die elektrische Maschine bereitgestellte Bremswirkung steuern. Besonders bevorzugt wird dabei der generatorische Betrieb der elektrischen Maschine derart angesteuert, dass eine ruckartige Bremswirkung durch die elektrische Maschine vermieden wird und ein sanfter Bremseingriff erfolgt.

Weiter bevorzugt ist die Steuereinheit eingerichtet, bei Überschreiten eines vorgegebenen Wertes einer vom Fahrer ausgeübten Bremskraft zusätzlich noch eine am Fahrrad vorgesehene mechanische Bremse zu aktivieren. Hierdurch soll sichergestellt werden, dass bei einer starken Betätigung der Bremse durch den Fahrer ein zusätzliches Bremsmoment durch die konventionelle Fahrradbremse bereitgestellt wird.

Weiter bevorzugt umfasst die Betätigungsvorrichtung einen zusätzlichen eigenständigen Schalter, um die Sperrvorrichtung zu aktivieren. Dadurch kann insbesondere auf Wunsch des Fahrers eine Bremswirkung der elektrischen Maschine zusätzlich oder auch nur alleinig bereitgestellt werden. Der Schalter ist dabei vorzugsweise am Lenker angeordnet. Somit kann die Bremsfunktion der elektrischen Maschine je nach Fahrerwunsch ein- und ausgeschaltet werden, um beispielsweise eine zu starke Bremswirkung bei einer Bergabfahrt zu vermeiden, oder bei einer Bergabfahrt eine dauerhafte Bremswirkung zu erreichen. In einer nicht beanspruchten Ausführung umfasst die Sperreinrichtung eine Kupplung mit einer ersten und zweiten Kupplungsscheibe und einem Aktor. Dadurch kann die Sperreinrichtung aktiviert werden, indem die beiden Kupplungsscheiben in Eingriff miteinander gebracht werden. Hierzu werden vorzugsweise eine oder beide Kupplungsscheiben in Axialrichtung bewegt, bis diese sich miteinander im Eingriff befinden. Dann ist ein Sperren durch die Sperreinrichtung möglich und die elektrische Maschine kann die gewünschte Bremswirkung bereitstellen. In einer auch nicht beanspruchten Ausführung umfasst die Sperreinrichtung einen Blockiermechanismus mit einem sich verjüngenden Aktorelement, insbesondere einem konischen Aktorelement. Durch axiale Bewegung des Aktorelements kann ebenfalls eine Sperrwirkung der Sperreinrichtung erreicht werden. Vorzugsweise umfasst der Freilauf am Antriebsrad dabei eine Hohlwelle und die Blockiereinrichtung umfasst ein flexibles Element mit einer Öffnung, in welche das Aktorelement einbringbar ist. Wenn das Aktorelement durch Axialverschiebung in die Öffnung eingebracht wird, wird das flexible Element ausgedehnt und gegen eine Innenwand der Hohlwelle gedrückt. Dadurch wird ein Sperren des Freilaufs ermöglicht. Die Anordnung der Sperreinrichtung in der Hohlwelle ermöglicht dabei einen besonders kompakten und geschützten Aufbau.

Weiter bevorzugt kann die elektrische Maschine als Generator betrieben werden und beispielsweise einen Energiespeicher am Fahrrad aufladen. Alternativ wird die elektrische Maschine als Wirbelstrombremse betrieben, um lediglich eine Bremswirkung bereitzustellen. Besonders bevorzugt kann dabei die Steuereinheit auswählen, ob eine Rekuperation durch die elektrische Maschine erfolgen soll oder lediglich eine Bremswirkung bereitgestellt werden soll oder beide Funktionen gleichzeitig ausgeführt werden.

Erfindungsgemäß kann somit die Möglichkeit einer durch eine elektrische Maschine eines Elektrofahrrads mit Mittelmotorkonzept bereitgestellten Bremswirkung genutzt werden, wobei die elektrische Maschine ausschließlich zur Bereitstellung einer Bremswirkung benutzt werden kann (Wirbelstrombremsenprinzip) und/oder auch zur Aufladung eines Energiespeichers des Elektrofahrrads genutzt werden kann.

### Zeichnung

Nachfolgend werden bevorzugte Ausführungsbeispiele der Erfindung unter Bezugnahme auf die begleitende Zeichnung im Detail beschrieben. In den Ausführungsbeispielen sind gleiche bzw. funktional gleiche Teile mit den gleichen Bezugszeichen versehen. In der Zeichnung ist:
- Figur 1: eine schematische Ansicht eines Fahrrads gemäß einem ersten Ausführungsbeispiel der Erfindung,
- Figur 2: eine schematische Teilansicht des Fahrrads von Figur 1 von hinten,
- Figuren 3 und 4: schematische Ansichten, welche die Funktion der Sperreinrichtung des ersten Ausführungsbeispiels erläutern,
- Figur 5: eine schematische Teilansicht von hinten eines Fahrrads gemäß einem zweiten Ausführungsbeispiel der Erfindung und
- Figuren 6 und 7: schematische Ansichten, welche die Funktion einer Sperreinrichtung des zweiten Ausführungsbeispiels verdeutlichen.

### Bevorzugte Ausführungsformen der Erfindung

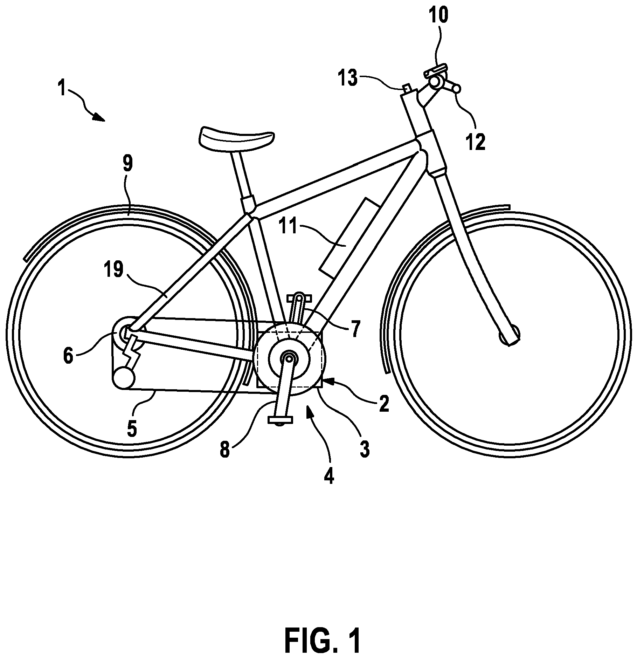

Nachfolgend wird unter Bezugnahme auf die Figuren 1 bis 4 ein Elektrofahrrad 1 gemäß einem ersten bevorzugten Ausführungsbeispiel der Erfindung im Detail beschrieben.

Das erfindungsgemäße Elektrofahrrad 1 umfasst einen Kurbeltrieb 2 und eine elektrische Maschine 3, welche im Bereich des Kurbeltriebs angeordnet ist. Die elektrische Maschine 3 ist dabei derart eingerichtet, dass diese sowohl als elektrischer Antrieb als auch als Generator verwendet werden kann.

Das Elektrofahrrad 1 umfasst ferner ein Kettenblatt 4, welches im Bereich des Kurbeltriebs 2 angeordnet ist und über eine Kette 5 ein an einem Hinterrad 9 angeordnetes Ritzel 6 antreibt. Die Bezugszeichen 7 und 8 bezeichnen dabei Kurbeln des Kurbeltriebs 2.

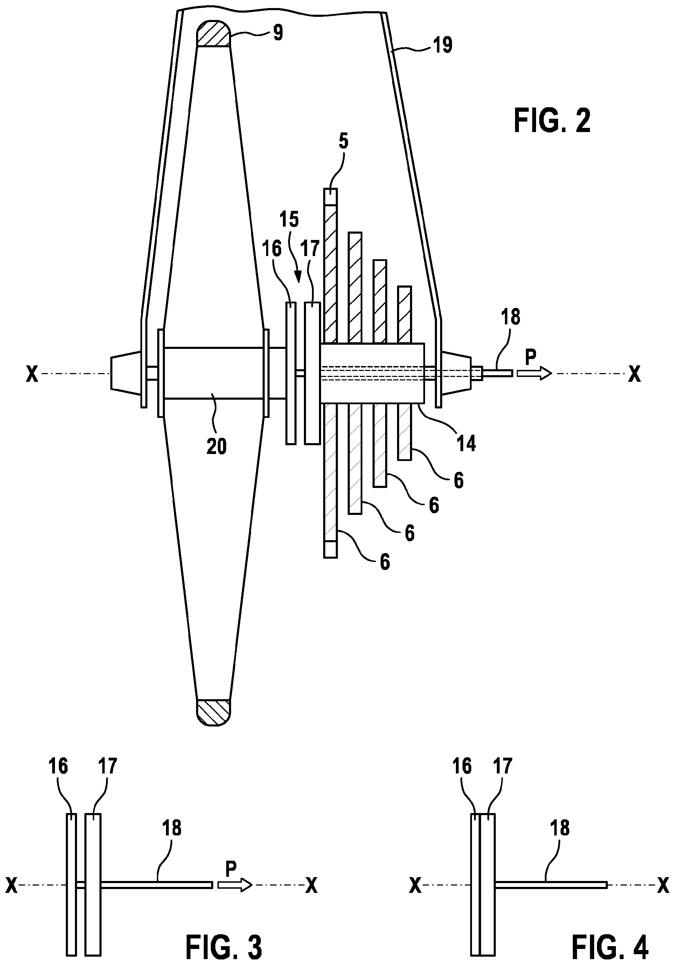

Wie aus Figur 2 ersichtlich ist, sind am Hinterrad 9 eine Vielzahl von Ritzeln 6 mit unterschiedlichen Durchmessern und Zähnezahlen in bekannter Weise angeordnet, um eine Hinterradschaltung bereitzustellen.

Zur Versorgung der elektrischen Maschine 3 mit Strom ist eine Energieversorgung 11 in Form einer Batterie vorgesehen. Das Bezugszeichen 12 am Lenker bezeichnet einen Handbremshebel, wobei in Figur 1 nur ein Handbremshebel dargestellt ist. Das Elektrofahrrad umfasst jedoch am Lenker in bekannter Weise zwei Handbremshebel. Weiterhin ist am Lenker eine Steuereinheit 10 angeordnet, welche auch eine Anzeigevorrichtung umfasst, um einem Fahrer verschiedene Parameter anzuzeigen.

In Figur 2 ist im Detail das Hinterrad 9 nebst Gangschaltung mit der Vielzahl von Ritzeln 6 dargestellt. Am Hinterrad 9 ist dabei ein erster Freilauf 14 angeordnet, welcher ein Mitdrehen der Ritzel 6 bei rollendem Hinterrad 9 verhindert. Zwischen einer Hinterachse 20 des Hinterrades 9 und dem Freilauf 14 ist eine Sperreinrichtung 15 angeordnet. Die Sperreinrichtung 15 umfasst eine erste Kupplungsscheibe 16, eine zweite Kupplungsscheibe 17 sowie einen Aktor 18 in Form einer axial verschiebbare Welle. Die Welle ist dabei mit der zweiten Kupplungsscheibe 17 verbunden, so dass die zweite Kupplungsscheibe 17 in Axialrichtung X-X der Welle bewegbar ist.

Die Funktion der Sperreinrichtung 15 ist dabei in den Figuren 3 und 4 dargestellt. Durch Bewegung des Aktors 18 in Richtung X-X (Pfeil P) werden die beiden Kupplungsscheiben 16, 17 miteinander in Eingriff gebracht bzw. wieder voneinander getrennt.

Die Steuereinheit 10 ist in diesem Ausführungsbeispiel am Lenker angeordnet. Es sei jedoch angemerkt, dass die Steuereinheit 10 beispielsweise auch an der elektrischen Maschine 3 oder dem Energiespeicher 11 angeordnet sein kann. Die Steuereinheit 10 ist nun derart eingerichtet, dass bei einem Bremswunsch des Fahrers und bei Betätigung wenigstens eines Bremshebels 12 der Aktuator 18 am Freilauf 14 betätigt wird, so dass der Freilauf 14 mittels der Sperreinrichtung 15 gesperrt wird. Dadurch drehen sich die Ritzel 6 gemeinsam mit dem Hinterrad 9 und treiben die Kette 5 an. Über das Kettenblatt 4 und den Kurbeltrieb 2 wird dann der Rotor der elektrischen Maschine 3 angetrieben. Hierdurch kann die elektrische Maschine 3 als Generator betrieben werden und die erzeugte Energie kann beispielsweise in den Energiespeicher 11 zurück eingespeist werden. Alternativ könnte die elektrische Maschine auch einfach als Wirbelstrombremse verwendet werden.

Der Aktuator 18 verläuft durch den hohlen Freilauf 14 und kann beispielsweise über einen Bowdenzug mechanisch bewegt werden. Somit wird automatisch bei einer Betätigung eines Bremshebels durch den Fahrer die Sperreinrichtung 15 gesperrt und die elektrische Maschine als Generator betrieben.

Um hierbei einem Ruck für den Fahrer durch die Verwendung der elektrischen Maschine 3 als Generator zu vermeiden, ist die Steuereinrichtung 10 eingerichtet, hier einen sanften Übergang vorzusehen.

Wie aus Figur 2 ersichtlich ist, ist durch die Anordnung der Sperreinrichtung 15 in Form der Kupplung zwischen dem Hinterrad 9 und dem Ritzelpaket nur ein minimaler Bauraum notwendig. Es sei ferner angemerkt, dass zur Vermeidung eines Mitdrehens der Pedale 7, 8 ein zweiter Freilauf am Kurbeltrieb 2 angeordnet ist. Es sei ferner angemerkt, dass statt des mechanischen Bowdenzugs beispielsweise auch eine hydraulische Bremse vorgesehen sein kann und der Aktor 18 durch den erzeugten Hydraulikdruck betätigt wird.

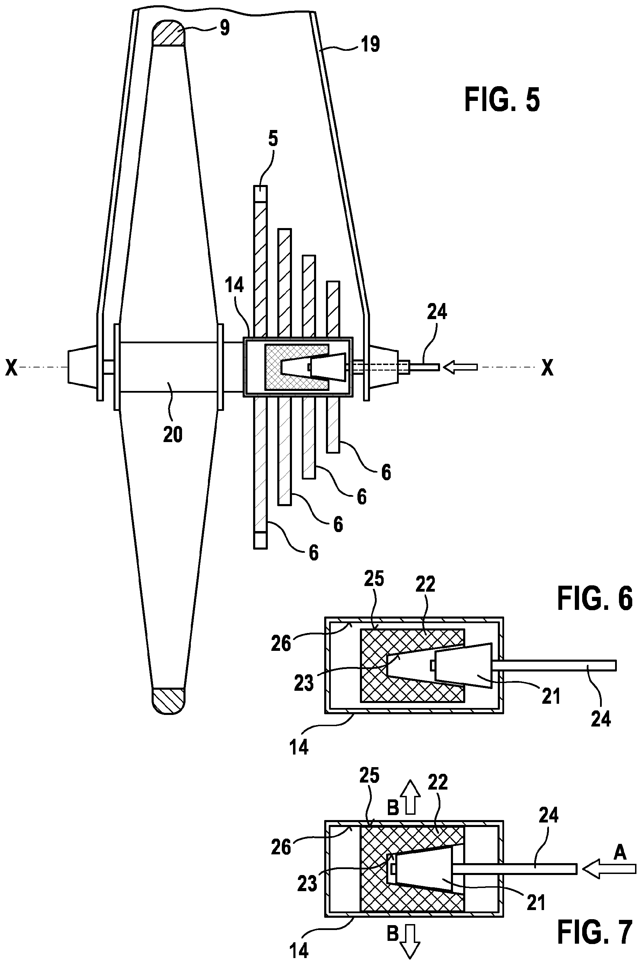

Die Figuren 5 bis 7 zeigen schematisch ein Elektrofahrrad 1 gemäß einem zweiten Ausführungsbeispiel der Erfindung. Im Unterschied zum ersten Ausführungsbeispiel umfasst die Sperreinrichtung 15 des zweiten Ausführungsbeispiels ein sich konisch verjüngendes Aktorelement 21, ein flexibles Element 22 mit einer Öffnung 23 und einen Aktor 24. Die Öffnung 23 ist ebenfalls konisch ausgebildet und das flexible Element 22 ist aus einem verformbaren Material hergestellt. Die Figuren 5 und 6 zeigen dabei den Nichteingriffszustand der Sperreinrichtung, so dass der Freilauf 14 frei läuft. Das Aktorelement 21 ist dabei nur teilweise in der Öffnung 23 angeordnet, wie in Figur 6 deutlich erkennbar ist. Die Sperreinrichtung 15 des zweiten Ausführungsbeispiels ist dabei vollständig im Freilauf 14 angeordnet.

Wenn nun ein Bremswunsch des Fahrers vorhanden ist und der Fahrer den Bremshebel betätigt, wird der Aktor 24 in Richtung des Pfeils A (vergleiche Figur 7) bewegt, so dass das Aktorelement 21 tiefer in die Öffnung 23 eingeführt wird. Dadurch kommt die konische Außenwand des Aktorelements 21 mit der konischen Innenwand der Öffnung 23 in Kontakt und das flexible Element 22 dehnt sich aus. Dies ist in Figur 7 dargestellt und durch die Pfeile B angedeutet. Hierdurch kommt es zu einem Reibschluss zwischen einer Außenfläche 25 des flexiblen Elements 22 und einer zylindrischen Innenwand 26 des Freilaufs 14. Hierdurch ist die Sperreinrichtung 15 gesperrt, so dass bei sich drehendem Hinterrad 9 die Drehung über das flexible Element 22 auf das Ritzelpaket und die Kette 5 übertragen wird. Die Kette 5 treibt dann die elektrische Maschine 3 an. Somit kann die elektrische Maschine 3 wieder als Generator betrieben werden, wie im ersten Ausführungsbeispiel im Detail beschrieben.

Somit ermöglicht die vorliegende Erfindung die Verwendung der elektrischen Maschine 3, welche am Kurbeltrieb 2 angeordnet ist, auch als Generator zum Aufladen des Energiespeichers 11 oder als Wirbelstrombremse zum Bremsen des Fahrrads. Erfindungsgemäß kann somit beim Mittelmotorkonzept auf einfache und kostengünstige Weise eine Rekuperation, beispielsweise bei Bergabfahrten, realisiert werden. Da sich beim Generator-/Bremsbetrieb der elektrischen Maschine 3 die Kette 5 dreht, kann vorzugsweise noch ein zusätzlicher Kettenschutz angebracht werden.

Weiterhin sei zu beiden Ausführungsbeispielen angemerkt, dass auch ein zusätzlicher, separater Schalter 13 vorgesehen sein kann, mit welchem der Rekuperationsbetrieb bzw. Bremsbetrieb durch die elektrische Maschine 3 eingeschaltet und ausgeschaltet werden kann. Somit kann der Fahrer selbst bestimmen, ob die Bremswirkung und/oder Rekuperation durch den elektrischen Antrieb 3, beispielsweise bei einer Bergabfahrt, ausgeführt werden soll oder nicht.

## Patentansprüche

1. Motorisch und/oder mit Muskelkraft betreibbares Elektrofahrrad, umfassend
- einen Kurbeltrieb (2),
- eine als Motor und Generator betreibbare elektrische Maschine (3), welche am Kurbeltrieb (2) angeordnet ist,
- ein Kraftübertragungselement (5) zum Übertragen einer Antriebskraft der elektrischen Maschine (3) auf ein Hinterrad (9),
- einen Freilauf (14) am Hinterrad (9),
- eine Sperreinrichtung (15), um den Freilauf (14) am Hinterrad zu sperren, und
- eine Betätigungsvorrichtung (12; 13), um die Sperreinrichtung (15) zu betätigen,
- wobei das Hinterrad (9) bei gesperrter Sperreinrichtung (15) über das Kraftübertragungselement (5) die elektrische Maschine (3) antreibt,
**dadurch gekennzeichnet, dass** das Elektrofahrrad
- eine Sensoreinrichtung und eine Steuereinheit (10) aufweist, wobei die Sensoreinrichtung eingerichtet ist, eine vom Fahrer ausgeübte Bremskraft mittels der Betätigungsvorrichtung zu erfassen und der Steuereinheit (10) zu übermitteln, und wobei die Steuereinheit (10) eingerichtet ist, die elektrische Maschine (3), basierend auf der erfassten Bremskraft, zu steuern, wobei die Bremskraft des Fahrers auf die Betätigungsvorrichtung (12, 13) erfasst wird.

2. Fahrrad nach Anspruch 1, **dadurch gekennzeichnet, dass** die Betätigungsvorrichtung wenigstens einen Bremshebel (12) umfasst.

3. Fahrrad nach einem der vorhergehenden Ansprüche, **dadurch gekennzeichnet, dass** die Steuereinheit (10) eingerichtet ist, bei Überschreiten eines vorgegebenen Wertes einer vom Fahrer ausgeübten Bremskraft zusätzlich eine am Fahrrad vorgesehene mechanische Bremse zu aktivieren.

4. Fahrrad nach einem der vorhergehenden Ansprüche, **dadurch gekennzeichnet, dass** die Betätigungsvorrichtung einen zusätzlichen, eigenständigen Schalter (13) umfasst.

5. Fahrrad nach einem der vorhergehenden Ansprüche, **dadurch gekennzeichnet, dass** die als Generator betriebene elektrische Maschine (3) einen Energiespeicher (11) auflädt und/oder dass die als Generator betriebene elektrische Maschine (3) als Wirbelstrombremse arbeitet.

6. Fahrrad nach einem der vorhergehenden Ansprüche, **gekennzeichnet durch** einen weiteren Freilauf am Kurbeltrieb (2), welcher bei gesperrtem erstem Freilauf (14) am Hinterrad (9) ein Mitdrehen von Pedalen (7, 8) des Kurbeltriebs (2) vermeidet.

## Claims

1. Electric bicycle which can be operated by a motor and/or by muscle force, comprising
- a crank drive (2),
- an electric machine (3) which can be operated as a motor and generator and is arranged on the crank drive (2),
- a force-transmitting element (5) for transmitting a drive force of the electric machine (3) to a rear wheel (9),
- a free wheel (14) on the rear wheel (9),
- a locking apparatus (15) for locking the free wheel (14) on the rear wheel, and
- an activation device (12; 13) for activating the locking apparatus (15),
- wherein when the locking apparatus (15) is locked the rear wheel (9) drives the electric machine (3) via the force-transmitting element (5),
**characterized in that** the electric bicycle
- has a sensor apparatus and a control unit (10), wherein the sensor apparatus is configured to detect a braking force applied by the driver by means of the activation device and to transmit it to the control unit (10), and wherein the control unit (10) is configured to control the electric machine (3) on the basis of the detected braking force, wherein the braking force of the driver on the activation device (12, 13) is detected.

2. Bicycle according to Claim 1, **characterized in that** the activation device comprises at least one brake lever (12).

3. Bicycle according to one of the preceding claims, **characterized in that** the control unit (10) is configured additionally to activate a mechanical brake provided on the bicycle when a predefined value of a braking force applied by the driver is exceeded.

4. Bicycle according to one of the preceding claims, **characterized in that** the activation device comprises an additional independent switch (13).

5. Bicycle according to one of the preceding claims, **characterized in that** the electric machine (3) which is operated as a generator charges an energy storage device (11), and/or **in that** the electric machine (3) which is operated as a generator operates as an eddy current brake.

6. Bicycle according to one of the preceding claims, **characterized by** a further free wheel on the crank drive (2), which free wheel avoids pedals (7, 8) turning along with the crank drive (2) when the first free wheel (14) on the rear wheel (9) is locked.

## Revendications

1. Bicyclette électrique motorisée et/ou à force musculaire, comprenant :
- un pédalier (2),
- une machine électrique (3) pouvant être mise en fonctionnement en tant que moteur et que générateur (3), qui est disposée sur le pédalier (2),
- un élément de transmission de force (5) destiné à transmettre une force d'entraînement de la machine électrique (3) à une roue arrière (9),
- un roulement libre (14) sur la roue arrière (9),
- un dispositif de verrouillage (15) destiné à verrouiller le roulement libre (4) sur la roue arrière, et
- un dispositif d'actionnement (12 ; 13) destiné à actionner le dispositif de verrouillage (15),
- dans lequel la roue arrière (9) entraîne la machine électrique (3) par l'intermédiaire de l'élément de transmission de force (5) lorsque le dispositif de verrouillage (15) est verrouillé,
**caractérisé en ce que** le bicyclette électrique
- comporte un dispositif détecteur et une unité de commande (10), dans lequel le dispositif détecteur est conçu pour détecter une force de freinage exercée par le cycliste au moyen du dispositif d'actionnement et la transmettre à l'unité de commande (10), et dans lequel l'unité de commande (10) est conçue pour commander la machine électrique (3) en fonction de la force de freinage détectée, dans lequel la force de freinage exercée par le cycliste sur le dispositif d'actionnement (12, 13) est détectée.

2. Bicyclette selon la revendication 1, **caractérisée en ce que** le dispositif d'actionnement comprend au moins une poignée de frein (12).

3. Bicyclette selon l'une quelconque des revendications précédentes, **caractérisée en ce que** l'unité de commande (10) est conçue pour activer en outre un frein mécanique prévu sur la bicyclette lorsqu'une valeur prédéterminée d'une force de freinage exercée par le cycliste est dépassée.

4. Bicyclette selon l'une quelconque des revendications précédentes, **caractérisée en ce que** le dispositif d'actionnement comprend en outre un commutateur indépendant (13).

5. Bicyclette selon l'une quelconque des revendications précédentes, **caractérisée en ce que** la machine électrique (3) entraînée en tant que générateur charge un accumulateur d'énergie (11) et/ou **en ce que** la machine électrique (3) entraînée en tant que générateur fonctionne en tant que frein à courant de Foucault.

6. Bicyclette selon l'une quelconque des revendications précédentes, **caractérisée par** un roulement libre supplémentaire sur le pédalier (2), qui évite un entraînement en rotation des pédales (7, 8) du pédalier (2) lorsque le premier roulement libre (14) est verrouillé sur la roue arrière (9).
